Europäisches Patentamt

European Patent Office

Office européen des brevets

(19)

(11) **EP 1 074 403 B1**

(12) **FASCICULE DE BREVET EUROPEEN**

(45) Date de publication et mention
de la délivrance du brevet:
**06.10.2004 Bulletin 2004/41**

(51) Int Cl.⁷: **B60C 5/14**, C08L 9/06,
B60C 9/14, C08L 7/00

(21) Numéro de dépôt: **00115979.7**

(22) Date de dépôt: **26.07.2000**

(54) **Enveloppe de pneumatique comportant une nappe de carcasse, une couche élastomère intérieure et une couche élastomère de renfort entre ladite nappe et ladite couche intérieure**

Luftreifen mit einer Karkasse, einer elastomeren Innenschicht und einer elastomeren Verstärkungsschicht zwischen Karkasse und Innenschicht

Pneumatic tyre comprising a carcass ply, an elastomeric inner layer and an elastomeric reinforcing layer between carcass ply and inner layer

(84) Etats contractants désignés:
**AT BE CH CY DE DK ES FI FR GB GR IE IT LI LU MC NL PT SE**

(30) Priorité: **02.08.1999 FR 9910110**

(43) Date de publication de la demande:
**07.02.2001 Bulletin 2001/06**

(73) Titulaires:
• **Sociéte de Technologie Michelin
63000 Clermont-Ferrand Cedex 09 (FR)**
• **Michelin Recherche et Technique S.A.
1763 Granges-Paccot (CH)**

(72) Inventeur: **Bidet, Bernard
63200 Riom (FR)**

(74) Mandataire: **Hiebel, Robert
Michelin & Cie,
Service SGD/LG/PI LAD
63040 Clermont-Ferrand Cedex 09 (FR)**

(56) Documents cités:
**FR-A- 2 536 017         FR-A- 2 606 020**

• **DATABASE WPI Section Ch, Week 199538
Derwent Publications Ltd., London, GB; Class
A11, AN 1995-289284 XP002130727 & JP 07
186609 A (SUMITOMO RUBBER IND LTD) , 25
juillet 1995 (1995-07-25)**

Remarques:
Le dossier contient des informations techniques présentées postérieurement au dépôt de la demande et ne figurant pas dans le présent fascicule.

EP 1 074 403 B1

**Description**

La présente invention concerne une enveloppe de pneumatique comportant une nappe de carcasse, une couche élastomère intérieure pour l'étanchéité vis-à-vis des gaz de gonflage et une couche élastomère de renfort entre ladite nappe et ladite couche intérieure. L'invention s'applique notamment à des enveloppes de structure radiale pour véhicules à moteur portant de lourdes charges, en particulier pour véhicules poids lourds et génie civil.

Il est connu de l'homme de l'art qu'une enveloppe de pneumatique à carcasse radiale pour véhicule à moteur portant de lourdes charges présente une ossature comportant les éléments suivants:

-   une ou plusieurs tringles en zone basse des flancs,
-   une armature de carcasse allant d'une tringle à l'autre et comprenant une nappe de carcasse radialement et axialement à l'extérieur de ladite couche intérieure, ladite nappe étant constituée de fils métalliques enrobés d'une couche élastomère, et
-   une armature de sommet qui est radialement située à l'extérieur de ladite armature de carcasse et qui comporte au moins deux nappes de sommet.

Cette ossature est consolidée et protégée par des couches élastomères disposées de part et d'autre de la nappe carcasse, cela de la manière suivante.

Axialement à l'extérieur de la nappe de carcasse, les flancs assurent une fonction de renforcement de l'armature de carcasse et une protection contre les agressions mécaniques et/ou chimiques auxquelles est soumise la nappe carcasse.

Axialement et radialement à l'intérieur de la nappe de carcasse, est prévue une couche élastomère intérieure définissant la face radialement interne de l'enveloppe. Cette couche intérieure est prévue suffisamment étanche vis-à-vis des gaz de gonflage, pour maintenir en roulage la pression de gonflage à l'intérieur de l'enveloppe et, par conséquent, pour protéger la nappe de carcasse de la migration des gaz de gonflage qui sont sous forte pression, en particulier de l'oxygène.

Cette couche intérieure d'étanchéité est généralement constituée d'une composition à base de caoutchouc butyl halogéné.

Pour renforcer davantage cette couche intérieure et, par conséquent, la nappe de carcasse, il est connu de prévoir une couche élastomère de renfort entre ladite nappe de carcasse et ladite couche intérieure. Cette couche de renfort assure la liaison mécanique avec la couche intérieure, et elle est également destinée à délocaliser partiellement les efforts subis par l'armature de carcasse.

Cette couche de renfort a également pour effet de protéger davantage la nappe de carcasse des agressions précitées, telles que la diffusion de l'oxygène, pour que ladite nappe conserve ses caractéristiques d'origine le plus longtemps possible et, par conséquent, pour augmenter la durée de vie de l'enveloppe et éventuellement le nombre de ses rechapages.

Il est essentiel que cette couche intermédiaire de renfort présente une compatibilité et, par conséquent, une liaison mécanique satisfaisantes, d'une part, avec la couche intérieure et, d'autre part, avec la nappe de carcasse pour éviter un décollement lors du roulage.

A cet effet, l'homme de l'art est naturellement conduit à utiliser, pour la couche intermédiaire de renfort, une composition proche de celle de la nappe de carcasse, pour que les constituants de type promoteurs d'adhésion élastomère-fils métalliques de ladite nappe ne migrent vers les couches voisines, et pour que des constituants de ces couches voisines qui seraient susceptibles de nuire à ladite adhésion ne migrent pas en retour vers la nappe carcasse.

Lorsque les compositions précitées sont très voisines et ont la même base élastomère, en l'absence de gradient de concentration et de différence de solubilité, il n'y a pas possibilité de migration de ces constituants.

Il est également connu de l'homme de l'art qu'une diminution de la température des mélanges internes en roulage augmente leur durée de vie, par ralentissement de leur vieillissement thermique et thermooxydant.

Parmi les différentes possibilités pour réaliser cette diminution de température en roulage, en dehors du domaine de l'architecture du pneumatique, on peut utiliser des compositions peu hystérétiques ou bien diminuer l'épaisseur de l'enveloppe pour favoriser l'évacuation de la chaleur vers la surface externe, avec comme avantage de diminuer la masse suspendue du véhicule.

Cependant, pour que la couche intermédiaire de renfort puisse être efficace en tant qu'élément de renforcement de la nappe de carcasse et en tant que barrière à l'oxygène vis-à-vis de la nappe de carcasse, l'enveloppe doit avoir une épaisseur suffisamment élevée, cela favorisant également la consommation de l'oxygène ayant migré à travers la couche intérieure.

A l'inverse, si une élévation de la température des mélanges internes en roulage favorise cet effet de barrière à l'oxygène, elle favorise également la migration précitée de l'oxygène, d'où un résultat final quasiment imprévisible pour l'homme de l'art.

En résumé, la couche intermédiaire de renfort doit assurer les fonctions principales suivantes:

- supporter sans dommage lors de la confection de l'enveloppe les forts allongements subis à cru au cours de la phase de conformation, ce qui implique une cohésion à cru élevée,
- contribuer au renforcement de la nappe de carcasse, aussi bien à cru qu'à cuit lors du roulage, en supportant une partie des efforts mécaniques, par une délocalisation des efforts que subit ladite nappe,
- assurer la liaison mécanique entre la nappe de carcasse, généralement à base de caoutchouc naturel et la couche intérieure, généralement à base de caoutchouc de type butyl halogéné,
- ne pas altérer la composition de la nappe de carcasse avant, pendant ou après la vulcanisation, par une composition insuffisamment proche de celle de ladite nappe,
- être une barrière à la migration de l'oxygène ayant traversé la couche intérieure.

Pour limiter la migration d'oxygène à travers la couche intermédiaire de renfort, l'homme de l'art peut agir de nombreuses manières, consistant par exemple à:

a) augmenter l'épaisseur de cette couche de renfort, mais avec comme inconvénients une augmentation de la masse et du prix de revient de l'enveloppe, et une élévation de l'échauffement en roulage des mélanges internes,
b) diminuer la pression partielle d'oxygène dans l'espace intérieur de l'enveloppe en la gonflant avec un air appauvri en oxygène, comme décrit par exemple dans le document de brevet JP-A-10 258 604, ou bien en pourvoyant la roue d'un moyen pour absorber l'oxygène, comme décrit dans le document de brevet JP-A-08 230 421,
c) fixer l'oxygène dans la couche intermédiaire de renfort en diminuant le taux d'agent anti-oxydant, mais ce qui ne va pas dans le sens d'une durée de vie élevée de l'armature de carcasse,
d) utiliser, comme indiqué dans ENCYCLOPEDIA KIRK-OTHMER, third edition, Wiley, volume 3, page 483 au chapitre « barrier polymers », un polymère moins perméable à l'oxygène en augmentant sa température de transition vitreuse Tg, sa polarité, sa cristallinité, sa rigidité de chaîne, son degré de compacité (ordre, symétrie), ou bien encore en utilisant au taux le plus élevé possible une charge grossière et/ou lamellaire interagissant de manière satisfaisante avec l'élastomère (utilisation éventuelle d'un agent de couplage charge-élastomère). Cependant, ce taux de charge est limité par les impératifs de mise en oeuvre et de tenue à la fatigue sous sollicitations répétées.

Le but de la présente invention est d'améliorer la durée de vie d'enveloppes de pneumatique supportant de lourdes charges.

L'homme de l'art qui souhaite atteindre ce but peut agir sur de nombreux paramètres physiques, chimiques et physicochimiques, mais il doit aussi prendre en compte en particulier les impératifs de résistance au roulement, de masse et de prix de revient des enveloppes.

Pour ce faire, il doit nécessairement procéder à des essais de roulage sur véhicule qui sont longs, coûteux et dont les résultats sont pratiquement imprévisibles, car le nombre de paramètres à considérer et les interactions entre ces derniers sont très élevés et connus de manière imparfaite.

Au cours des nombreux essais effectués, la demanderesse a découvert de façon imprévisible qu'une enveloppe de pneumatique, dont la composition de la couche intermédiaire de renfort comprend les éléments suivants, permet d'atteindre ce but:

- une matrice élastomère comprenant au moins:

un polyisoprène naturel ou synthétique dont les enchaînements comprennent en majorité des enchaînements cis-1, 4, et
un copolymère d'un ou plusieurs monomères à diènes conjugués et d'un ou plusieurs monomères vinylaromatiques, ledit copolymère étant tel que son taux D (en %) d'enchaînements diéniques -1,2 et son taux VA (en %) d'enchaînements vinylaromatiques satisfont à la fois aux quatre inégalités suivantes:

(i) $D \geq 60 - 1{,}75. VA$
(ii) $D \leq 116 - 1{,}64. VA$
(iii) $D > 10$
(iv) $VA > 10$,

et
- du noir de carbone, selon un nombre de parties en poids pour cent parties dudit élastomère (pce) qui est compris entre 25 et 85 pce,

ledit noir de carbone présentant des valeurs de structure DBP (en ml/100 g) et de surface spécifique BET (en m$^2$/g) qui satisfont à l'inégalité suivante:

$$DBP \leq -0,88. \ BET + 190.$$

La mesure de la structure DBP du noir de carbone est effectuée de manière connue en utilisant l'huile de dibutyl phtalate. Quant à la mesure de la surface spécifique BET, elle est effectuée selon la méthode de BRUNAUER, EMMET et TELLER décrite dans « The Journal of the American Chemical Society », vol. 60, page 309, février 1938, correspondant à la norme NFT 45007 de novembre 1987.

De préférence,

- pour ladite matrice élastomère, le taux d'enchaînements cis-1,4 dudit polyisoprène est supérieur à 80 %, et ledit copolymère est préparé en solution à partir d'un ou plusieurs monomères à diènes conjugués choisis parmi le butadiène et/ou l'isoprène, et à partir d'un ou plusieurs monomères vinylaromatiques choisis parmi le styrène et/ou l'α-méthylstyrène,
  ledit copolymère étant tel que lesdits taux d'enchaînements D et VA satisfont à la fois aux quatre inégalités suivantes:

  (i) $D \geq 66 - 1,58. \ VA$
  (ii) $D \leq 124 - 1,71. \ VA$
  (iii) $D > 10$
  (iv) $VA > 10$,

  et,
- pour ledit noir de carbone, les valeurs de structure DBP (en ml/ 100g) et de surface spécifique BET (en m$^2$/g) satisfont à l'inégalité suivante:

$$DBP \leq -0,88. \ BET + 185.$$

Egalement à titre préférentiel, ladite matrice élastomère comprend ledit polyisoprène selon une quantité comprise entre 10 et 90 pce, et ledit copolymère selon une quantité comprise entre 90 et 10 pce.

Et à titre encore plus préférentiel, ladite matrice élastomère comprend ledit polyisoprène selon une quantité comprise entre 15 et 85 pce, et ledit copolymère selon une quantité comprise entre 85 et 15 pce.

Bien entendu, ledit polyisoprène et/ou ledit copolymère peuvent être couplés et/ou étoilés ou encore fonctionnalisés, avec un agent de couplage et/ou d'étoilage ou de fonctionnalisation.

Selon une autre caractéristique de l'invention, ladite composition comprend également, selon une quantité inférieure à 50 pce, au moins une charge claire renforçante, préférentiellement de la silice et/ou de l'alumine, pourvue en surface de fonctions SiOH et/ou AIOH ou bien, toujours selon une quantité inférieure à 50 pce, du noir de carbone pourvu en surface desdites fonctions SiOH et/ou AIOH.

Les charges claires préférentielles que sont la silice et/ou l'alumine pourvues des fonctions précitées sont de préférence caractérisées par une surface spécifique BET comprise entre 30 et 240 m$^2$/g, et il peut s'agir d'une silice précipitée ou pyrogénée, d'une alumine ou d'un silico-aluminate.

Le noir de carbone pourvu des fonctions précitées peut être modifié à cet effet, soit au cours de la synthèse par addition d'un composé du silicium et/ou de l'aluminium à l'huile d'alimentation du four, soit après la synthèse par addition d'un acide à une suspension aqueuse de noir de carbone dans une solution de silicate et/ou d'aluminate de métal alcalin, de manière à recouvrir au moins partiellement de fonctions SiOH et/ou AIOH la surface du noir de carbone.

Comme exemples non limitatifs de charges duales à base de noir de carbone et de silice avec en surface des fonctions SiOH et/ou AIOH, on peut citer les charges de type CSDPF (carbon silica dual phase filler) qui sont décrites dans la conférence n° 24 du Meeting ACS, Rubber Division, Anaheim, California, 6-9 mai 1997, ainsi que celles mentionnées dans le document de brevet EP-A-799 854 et dans le document de brevet WO-A-96/037447.

On notera que, dans le but d'améliorer la mise en oeuvre et/ou d'abaisser le coût des compositions de couche de renfort selon l'invention, cela sans que les caractéristiques d'hystérèse et de cohésion soient fondamentalement modifiées, on peut remplacer partiellement la charge ou les coupages de charge renforçantes précédemment décrits par une charge dont le degré renforçant est moindre, par exemple un carbonate de calcium broyé ou précipité, un kaolin, à condition de remplacer x pce de charge renforçante par x+5 pce de charge moins renforçante, x étant inférieur à 15 pce.

Ladite composition peut comprendre également:

- 1 à 5 pce d'un agent anti-oxydant constitué d'une paraphénylène diamine, par exemple la N-(1, 3-diméthyl butyl) -N'-phényl-p-phénylène diamine, et/ou
- 0,03 à 3 pce d'un sel métallique, qui est choisi parmi des sels organiques, tels que ceux décrits dans le document de brevet FR-A-2 770 848 au nom de la demanderesse, et des sels tels que les hydroxydes de cobalt, de nickel et fer, et/ou
- de l'acide stéarique selon une quantité inférieure à 2 pce, et/ou
- de l'oxyde de zinc selon une quantité supérieure à 2 pce, et/ou
- 1 à 6 pce de soufre.

Selon une autre caractéristique de l'invention, ladite couche élastomère de renfort présente une épaisseur comprise entre 1 mm et 4 mm.

Les compositions de couche de renfort selon l'invention peuvent réticuler sous l'action du soufre, des peroxydes, ou des bismaléïmides avec ou sans soufre. Elles peuvent également contenir les autres constituants habituellement utilisés dans les mélanges de caoutchouc, comme des plastifiants, des pigments, des anti-oxydants, des accélérateurs de réticulation tels que les dérivés du benzothiazole et la diphénylguanidine.

Ces compositions selon l'invention peuvent être préparées selon les procédés connus de travail thermo-mécanique des constituants comprenant une ou plusieurs étapes.

On peut par exemple les obtenir par un travail thermo-mécanique réalisé en une seule étape dans un mélangeur interne, avec une vitesse de rotation des palettes de 50 tours par minute, étape qui dure alors de 3 à 7 minutes, suivie d'une étape de finition effectuée à environ 80° C.

On peut également les obtenir par un travail thermo-mécanique réalisé en deux étapes dans un mélangeur interne, étapes qui durent respectivement 3 à 5 minutes et 2 à 4 minutes, et qui sont suivies d'une étape de finition également effectuée à environ 80° C. Dans le cas d'une composition réticulée au soufre, on incorpore le soufre et les accélérateurs de vulcanisation pendant cette étape de finition.

Les caractéristiques précitées de la présente invention, ainsi que d'autres, seront mieux comprises à la lecture de la description suivante de plusieurs exemples de réalisation de l'invention, donnés à titre illustratif et non limitatif.

Dans ces exemples, qui peuvent être conformes ou non à la présente invention, les propriétés des compositions sont évaluées comme suit:

Viscosité Mooney

La viscosité Mooney ML( 1+4) est mesurée selon la norme ASTM D-1646.

Rhéométrie

Les mesures de rhéométrie sont effectuées par mesure de couple sur un rhéomètre commercialisé sous la dénomination « Monsanto » et de modèle « 100S ». Elles sont destinées à suivre le processus de vulcanisation en déterminant le temps To (en minutes) qui correspond au retard de vulcanisation, et le temps T99 (en minutes) qui correspond à 99 % du couple maximum mesuré.

Mesures d'allongement

On mesure les modules d'allongement à 10 % (MA10) et à 100 % (MA100) selon la norme ISO 37-1977.

Indices de cassage Scott

Ces indices sont mesurés à 23° C ou à 100° C. On détermine la contrainte à la rupture (FR) en MPa, et l'allongement à la rupture (AR) en %.

Indices de déchirabilité

Ces indices sont mesurés à 100° C. On détermine la force de rupture (FRD) en MPa et l'allongement à la rupture (ARD) en %, sur une éprouvette de dimensions 10 x 105 x 2,5 mm qui est entaillée à son centre sur une profondeur de 5 mm.

Pertes hystérétiques

Les pertes hystérétiques (PH) ou hystérèse, sont mesurées par rebond à 60° C selon la norme ISO R17667, et elles sont exprimées en %.

Durée de vie d'une armature de carcasse

Dans un test de roulage sur volant, on note le kilométrage parcouru par l'enveloppe à tester et par l'enveloppe témoin, dès qu'une avarie est détectée. Cette durée de vie est exprimée en valeur relative, avec une base 100 correspondant à une enveloppe témoin.

Test de roulage sur route

Dans ce test de roulage réel sur route, on mesure la force de rupture des fils de la nappe de carcasse de l'enveloppe à tester et de l'enveloppe témoin ayant parcouru le même nombre de kilomètres sur le même véhicule, après décorticage et sans attendre l'apparition d'une avarie de l'enveloppe, et dans les zones soumises aux plus fortes contraintes, c'est-à-dire en zone basse et au niveau de l'épaule.

Le résultat de ce test est exprimé en valeur relative de la force de rupture, avec une base 100 correspondant à l'enveloppe témoin.

## EXEMPLE 1

Cet exemple a pour but de comparer les performances obtenues sur des enveloppes dont les compositions de couche de renfort sont conformes à l'invention, avec celles obtenues pour une composition témoin de couche de renfort qui est représentative de l'état de la technique connu.

Ces compositions, qui dans cet exemple sont toutes vulcanisables au soufre, sont détaillées dans le tableau 1 ci-après. Il s'agit:

- dans le cas de l'essai 1, d'une composition témoin à base de caoutchouc naturel,
- dans le cas de l'essai 2, d'une composition non conforme à l'invention à base d'un copolymère de styrène et de butadiène préparé en solution (en abrégé: SBR A solution), et
- dans le cas des essais 3, 4, 5 et 6, de compositions selon l'invention à base d'une matrice élastomère constituée de coupages de caoutchouc naturel et dudit SBR A (en abrégé: NR-SBR A solution), dans lesquelles on fait varier la nature de l'huile d'extension.

Dans cet exemple:

On utilise un caoutchouc naturel peptisé qui présente une valeur de Mooney ML (1+4) à 100° C égale à 60.

On utilise un polymère SBR A solution qui présente une valeur de Mooney égale à 54, un taux d'enchaînements -1,2 égal à 24 % et un taux d'enchaînements styrénique égal à 40 %.

On utilise à titre d'agent anti-oxydant la N-(1,3-diméthyl butyl)-N'-phényl-p-phénylène diamine.

On utilise à titre de sel métallique un résinate de cobalt, avec un taux exprimé en pce de cobalt.

Les compositions sont obtenues par addition de tous les constituants, sauf le soufre soluble et les agents accélérateurs de vulcanisation, au moyen d'un travail thermo-mécanique en une seule étape qui dure environ 4 minutes, avec une vitesse de rotation des palettes de 50 tours par minute jusqu'à atteindre une température de tombée de 170° C, suivie d'une étape de finition effectuée à 80° C, pendant laquelle sont incorporés le soufre et les agents accélérateurs de vulcanisation.

Tableau 1

| Composition | Essai 1 témoin | Essai 2 | Essai 3 | Essai 4 | Essai 5 | Essai 6 |
|---|---|---|---|---|---|---|
| Caoutchouc naturel | 100 | | 50 | 20 | 20 | 20 |
| SBR A | | 100 | 50 | 80 | 80 | 80 |
| N326 | 50 | | | | | |
| N772 | | 65 | 65 | 65 | 65 | 65 |
| | | | | | | |
| ZnO | 6 | 6 | 6 | 6 | 6 | 6 |
| Acide stéarique | 0,5 | 0,5 | 0,5 | 0,5 | 0,5 | 0,5 |

Tableau 1  (suite)

| Composition | Essai 1 témoin | Essai 2 | Essai 3 | Essai 4 | Essai 5 | Essai 6 |
|---|---|---|---|---|---|---|
| Antioxydant | 2 | 2 | 2 | 2 | 2 | 2 |
| Huile aromatique | | 18,75 | 18,75 | 18,75 | 10 | |
| Huile de paraffine | | | | | | 10 |
| % Co | 0,2 | 0,2 | 0,2 | 0,2 | 0,2 | 0,2 |
| soufre soluble | 5 | 5 | 5 | 5 | 5 | 5 |
| TBBS | 0,6 | 0,6 | 0,6 | 0,6 | 0,6 | 0,6 |
| où TBBS est la t-Butylbenzothiazole sulfénamide. | | | | | | |

La vulcanisation est effectuée à 140° C pendant un temps suffisant pour atteindre 99 % de la valeur du couple maximum, mesurée au rhéomètre.

On compare entre elles les propriétés de ces six compositions. Les résultats sont consignés dans le tableau 2 ci-après.

Tableau 2

| | Essai 1 témoin | Essai 2 | Essai 3 | Essai 4 | Essai 5 | Essai 6 |
|---|---|---|---|---|---|---|
| Mooney ML (1+4) | 74 | 67 | 70 | 67 | 70 | 70 |
| To | 5 | 17 | 10 | 13 | 15 | 15 |
| T99 | 47 | 164 | 125 | 150 | 150 | 140 |
| MA10 | 5,6 | 3,7 | 4,5 | 4,3 | 4,6 | 4,2 |
| MA100 | 2,6 | 2,0 | 2,5 | 2,4 | 2,6 | 2,6 |
| PH à 60° | 18 | 18 | 17,5 | 18 | 16 | 15 |
| Cassage à 100°C | | | | | | |
| FR en MPa | 16 | 17 | 18 | 17 | 15 | 15 |
| AR en % | 510 | 510 | 550 | 480 | 300 | 340 |
| Déchirabilité | | | | | | |
| FRD en MPa | 22 | 24 | 25 | 22 | 32 | 26 |
| ARD en % | 94 | 132 | 135 | 110 | 133 | 116 |
| Roulage volant | | | | | | |
| Durée de vie du pneu | 100 | (*) | 120 | 160 | 190 | 160 |
| Roulage sur route | | | | | | |
| FR des fils zone basse | 100 | (*) | 105 | 115 | 125 | 115 |
| FR des fils zone épaule | 100 | (*) | 105 | 110 | 120 | 110 |

(*) Les enveloppes avec une composition de couche de renfort constituée de SBR A solution pur n'ont pas pu être testées en roulage, en raison des défauts que présente dans ce cas la nappe de carcasse.

On notera que pour les compositions selon l'invention correspondant aux essais 3, 4, 5 et 6, c'est-à-dire qui comprennent des coupages de caoutchouc naturel avec du SBR A solution, les performances en roulage sont nettement améliorées par rapport à celles de la composition témoin.

## EXEMPLE 2

Cet exemple a pour but de comparer les performances obtenues sur des enveloppes dont les compositions de couche de renfort sont conformes ou non à l'invention, avec celles obtenues pour une composition témoin représentative de l'état de la technique connu.

Ces compositions, qui dans cet exemple sont toutes vulcanisables au soufre, sont détaillées dans le tableau 3 ci-après. Il s'agit:

- dans le cas de l'essai 7, d'une composition témoin à base de caoutchouc naturel,
- dans le cas de l'essai 8, d'une composition non conforme à l'invention en raison de la nature du noir de carbone qu'elle comprend,
- dans le cas des essais 9 et 10, de compositions selon l'invention.

Dans cet exemple:

On utilise un polymère SBR B solution, dont la valeur de Mooney ML (1+4) à 100° est égale à 54, dont le taux d'enchaînements -1,2 est de 24 % et dont le taux d'enchaînements styréniques est de 26 %.

On utilise un sel de fer à base d'hydroxyde de fer, avec un taux exprimé en pce de fer métallique.

Les compositions sont obtenues par addition de tous les constituants, sauf le soufre soluble et les agents accélérateurs de vulcanisation, comme dans l'exemple 1.

La vulcanisation est également effectuée à 140° C pendant un temps suffisant pour atteindre 99 % de la valeur du couple maximum, mesurée au rhéomètre.

On compare entre elles les propriétés des quatre compositions testées. Les résultats sont consignés dans le tableau 4 ci-après.

On notera que pour le témoin (essai 7) et la composition non conforme (essai 8), les performances obtenues sont inférieures à celles des compositions de l'invention (essais 9 et 10).

Tableau 3

| Composition | Essai 7 témoin | Essai 8 | Essai 9 | Essai 10 |
|---|---|---|---|---|
| Caoutchouc naturel | 100 | 70 | 20 | 20 |
| SBR A | | | 80 | 80 |
| SBR B | | 30 | | |
| N326 | | | | 50 |
| N375 | | 45 | | |
| N772 | 45 | | 45 | |
| ZnO | 7,5 | 5 | 7,5 | 7,5 |
| Acide stéarique | 1,0 | 0,5 | 1,0 | 1,0 |
| Antioxydant | 2 | 2 | 2 | 2 |
| Co métal (pce) | | 0,2 | | 0,2 |
| Fe métal | 0,02 | | 0,02 | |
| soufre soluble | 4,5 | 4,5 | 4,5 | 4,5 |
| TBBS | 0,7 | 0,6 | 0,7 | 0,7 |

Tableau 4

| Composition | Essai 7 témoin | Essai 8 | Essai 9 | Essai 10 |
|---|---|---|---|---|
| Mooney ML (1+4) | 65 | 75 | 70 | 67 |
| To | 6 | 5 | 10 | 6 |
| T99 | 29 | 51 | 125 | 55 |
| MA10 | 3,5 | 5,6 | 4,5 | 5,5 |
| MA100 | 2,1 | 2,8 | 2,5 | 2,7 |
| PH à 60° | 5 | 20 | 17,5 | 19 |
| Cassage à 100° C | | | | |
| FR en MPa | 17 | 12,4 | 18 | 14 |

Tableau 4   (suite)

| Composition | Essai 7 témoin | Essai 8 | Essai 9 | Essai 10 |
|---|---|---|---|---|
| Cassage à 100° C | | | | |
| AR en % | 550 | 357 | 550 | 380 |
| Déchirabilité | | | | |
| FRD en MPa | 17 | 17 | 25 | 22 |
| ARD en % | 83 | 82 | 135 | 90 |
| Roulage volant | | | | |
| Durée de vie du pneu | 100 | 85 | 130 | 110 |
| Roulage sur route | | | | |
| FR des fils zone basse | 100 | 95 | 110 | 102 |
| FR des fils zone épaule | 100 | 95 | 110 | 105 |

En résumé, la durée de vie d'une enveloppe comportant une armature de carcasse caractérisée par une composition selon l'invention pour la couche intermédiaire de renfort, cela avant apparition d'un dommage notable, est supérieure à celle des compositions connues d'au moins 20 %, et parfois de plus de 50 %.

**Revendications**

**1.**  Enveloppe de pneumatique comportant:

- une nappe de carcasse à base de fils métalliques et d'une couche élastomère de carcasse enrobant lesdits fils,
- une couche élastomère intérieure qui définit la face radialement interne de ladite enveloppe et qui est destinée à protéger ladite nappe de carcasse de la diffusion d'air provenant de l'espace intérieur de ladite enveloppe, et
- une couche élastomère de renfort qui est située entre ladite nappe de carcasse et ladite couche intérieure et qui est constituée d'une composition de caoutchouc,

**caractérisée en ce que** ladite composition comprend:

- une matrice élastomère comprenant au moins:

  un polyisoprène naturel ou synthétique dont les enchaînements comprennent en majorité des enchaînements cis-1, 4, et
  un copolymère d'un ou plusieurs monomères à diènes conjugués et d'un ou plusieurs monomères vinylaromatiques, ledit copolymère étant tel que son taux D (en %) d'enchaînements diéniques -1,2 et son taux VA (en %) d'enchaînements vinylaromatiques satisfont à la fois aux quatre inégalités suivantes:

  (i) $D \geq 60 - 1,75. VA$
  (ü) $D \leq 116 - 1,64. VA$
  (iii) $D > 10$
  (iv) $VA > 10$,

  et
- du noir de carbone, selon un nombre de parties en poids pour cent parties dudit élastomère (pce) qui est compris entre 25 et 85 pce,

ledit noir de carbone présentant des valeurs de structure DBP (en ml/ 100 g) et de surface spécifique BET (en $m^2$/g) qui satisfont à l'inégalité suivante:

$$DBP \leq -0,88. BET + 190.$$

**2.** Enveloppe de pneumatique selon la revendication 1, **caractérisée en ce que**:

- pour ladite matrice élastomère, le taux d'enchaînements cis-1,4 dudit polyisoprène est supérieur à 80 %, et ledit copolymère est préparé en solution à partir d'un ou plusieurs monomères à diènes conjugués choisis parmi le butadiène et/ou l'isoprène, et à partir d'un ou plusieurs monomères vinylaromatiques choisi parmi le styrène et/ou l'α-méthylstyrène,
  ledit copolymère étant tel que lesdits taux d'enchaînements D et VA satisfont à la fois aux quatre inégalités suivantes:

    (i) $D \geq 66 - 1{,}58 \cdot VA$
    (ii) $D \leq 124 - 1{,}71 \cdot VA$
    (iii) $D > 10$
    (iv) $VA > 10$,

    et **en ce que**
- pour ledit noir de carbone, les valeurs de structure DBP (en ml/ 100g) et de surface spécifique BET (en $m^2$/g) satisfont à l'inégalité suivante:

$$DBP \leq -0{,}88 \cdot BET + 185.$$

**3.** Enveloppe de pneumatique selon une des revendications 1 ou 2, **caractérisée en ce que** ladite composition comprend également, selon une quantité inférieure à 50 pce, au moins une charge claire renforçante comprenant de la silice et/ou de l'alumine, de surface spécifique BET comprise entre 30 $m^2$/g et 240 $m^2$/g, ladite charge étant pourvue en surface de fonctions SiOH et/ou AlOH.

**4.** Enveloppe de pneumatique selon une des revendications 1 ou 2, **caractérisée en ce que** ladite composition comprend également, selon une quantité inférieure à 50 pce, du noir de carbone pourvu en surface de fonctions SiOH et/ou AlOH.

**5.** Enveloppe de pneumatique selon une des revendications précédentes, **caractérisée en ce que** ladite composition comprend également 1 à 5 pce d'un agent anti-oxydant constitué d'une paraphénylène diamine.

**6.** Enveloppe de pneumatique selon une des revendications précédentes, **caractérisée en ce que** ladite composition comprend également 0,03 à 3 pce d'un sel métallique, qui est choisi parmi les sels organiques et les hydroxydes de cobalt, de nickel et fer.

**7.** Enveloppe de pneumatique selon une des revendications précédentes, **caractérisée en ce que** ladite composition comprend également de l'acide stéarique selon une quantité inférieure à 2 pce.

**8.** Enveloppe de pneumatique selon une des revendications précédentes, **caractérisée en ce que** ladite composition comprend également de l'oxyde de zinc selon une quantité supérieure à 2 pce.

**9.** Enveloppe de pneumatique selon une des revendications précédentes, **caractérisée en ce que** ladite composition comprend également 1 à 6 pce de soufre.

**10.** Enveloppe de pneumatique selon une des revendications précédentes, **caractérisée en ce que** ladite couche élastomère de renfort présente une épaisseur comprise entre 1 mm et 4 mm.

**11.** Enveloppe de pneumatique selon une des revendications précédentes, **caractérisée en ce que** ladite composition comprend en outre du kaolin.

**Claims**

**1.** A tyre comprising:

- a carcass ply based on metal wires and an elastomeric carcass layer coating said wires,

- an inner elastomeric layer which defines the radially inner face of said tyre and is intended to protect said carcass ply from the diffusion of air coming from the inner space of said tyre, and
- an elastomeric reinforcement layer which is located between said carcass ply and said inner layer, and which is formed of a rubber composition,

**characterised in that** said composition comprises:

- an elastomeric matrix comprising at least:

a natural or synthetic polyisoprene, the linkages of which comprise a majority of cis-1,4 linkages, and a copolymer of one or more monomers having conjugated dienes and one or more vinyl aromatic monomers, said copolymer being such that its amount D (in %) of -1,2 diene linkages and its amount VA (in %) of vinyl aromatic linkages at the same time fulfil the following four inequations:

(i) $D \geq 60 - 1.75 \cdot VA$
(ii) $D \leq 116 - 1.64 \cdot VA$
(iii) $D > 10$
(iv) $VA > 10$,

and
- carbon black, in a number of parts by weight per hundred parts of said elastomer (phr) of between 25 and 85 phr,

said carbon black having values of DBP structure (in ml/100 g) and of BET specific surface area (in $m^2$/g) which fulfil the following inequation:

$$DBP \leq -0.88 \cdot BET + 190.$$

2. A tyre according to Claim 1, **characterised in that**:

- for said elastomeric matrix, the number of cis-1,4 linkages of said polyisoprene is greater than 80%, and said copolymer is prepared in solution from one or more monomers having conjugated dienes, selected from among butadiene and/or isoprene, and from one or more vinyl aromatic monomers selected from among styrene and/or $\alpha$-methylstyrene,

said copolymer being such that said numbers of linkages D and VA fulfil simultaneously the following four inequations:

(i) $D \geq 66 - 1.58 \cdot VA$
(ii) $D \leq 124 - 1.71 \cdot VA$
(iii) $D > 10$
(iv) $VA > 10$, and **in that**

- for said carbon black, the values of DBP structure (in ml/100 g) and of BET specific surface area (in $m^2$/g) fulfil the following inequation:

$$DBP \leq -0.88 \cdot BET + 185.$$

3. A tyre according to one of Claims 1 or 2, **characterised in that** said composition also comprises, in a quantity of less than 50 phr, at least one reinforcing clear filler comprising silica and/or alumina, of a BET specific surface area of between 30 $m^2$/g and 240 $m^2$/g, said filler being provided with SiOH and/or AlOH functions at the surface.

4. A tyre according to one of Claims 1 or 2, **characterised in that** said composition also comprises, in a quantity of less than 50 phr, carbon black provided with SiOH and/or AlOH functions at the surface.

5. A tyre according to one of the preceding claims, **characterised in that** said composition also comprises 1 to 5 phr of an antioxidant formed of a paraphenylene diamine.

6. A tyre according to one of the preceding claims, **characterised in that** said composition also comprises 0.03 to 3 phr of a metal salt, which is selected from among organic salts and hydroxides of cobalt, nickel and iron.

7. A tyre according to one of the preceding claims, **characterised in that** said composition also comprises stearic acid in a quantity of less than 2 phr.

8. A tyre according to one of the preceding claims, **characterised in that** said composition also comprises zinc oxide in a quantity of more than 2 phr.

9. A tyre according to one of the preceding claims, **characterised in that** said composition also comprises 1 to 6 phr of sulphur.

10. A tyre according to one of the preceding claims, **characterised in that** said elastomeric reinforcement layer has a thickness of between 1 mm and 4 mm.

11. A tyre according to one of the preceding claims, **characterised in that** said composition furthermore comprises kaolin.


**Patentansprüche**

1. Luftreifen, der umfaßt:

   - eine Karkasslage auf der Basis von Metalldrähten und einer elastomeren Karkassschicht, die diese Drähte umhüllt,
   - eine elastomere Innenschicht, die die radial innere Seite des Luftreifens bildet und die dafür vorgesehen ist, die Karkasslage vor der Diffusion von Luft, die aus dem Innenraum des Luftreifens stammt, zu schützen, und
   - eine elastomere Verstärkungsschicht, die zwischen der Karkasslage und der Innenschicht angeordnet ist und die aus einer Kautschukzusammensetzung besteht,

   **dadurch gekennzeichnet, dass** diese Zusammensetzung umfaßt:

   - eine Elastomermatrix, die mindestens enthält:

      ein natürliches oder synthetisches Polyisopren, dessen Verknüpfungen überwiegend aus 1,4-cis-Verknüpfungen bestehen, und
      ein Copolymer aus einem oder mehreren Monomeren mit konjugierter Diengruppe und einem oder mehreren vinylaromatischen Monomeren, wobei das Copolymer so aufgebaut ist, dass sein Gehalt D (in %) an 1,2-Dien-Verknüpfungen und sein Gehalt VA (in %) an vinylaromatischen Verknüpfungen gleichzeitig die vier folgenden Relationen erfüllen:

      (i) $D \geq 60 - 1{,}75 \cdot VA$
      (ü) $D \leq 116 - 1{,}64 \cdot VA$
      (iii) $D > 10$,
      (iv) $VA > 10$, und

   - Ruß in einer Anzahl von Gewichtsteilen pro 100 Teile des Elastomers (pce), die im Bereich von 25 bis 85 pce liegt,

   wobei der Ruß einen DBP-Strukturwert (in ml/ 100 g) und eine spezifische BET-Oberfläche (in m$^2$/g) aufweist, die die folgende Relation erfüllen:

$$DBP \leq -0{,}88 \cdot BET + 190.$$

2. Luftreifen nach Anspruch 1, **dadurch gekennzeichnet,**

   - **dass** für die Elastomermatrix der Gehalt des Polyisoprens an 1,4-*cis*-Verknüpfungen größer als 80 % ist und dass das Copolymer durch Lösungspolymerisation aus einem oder mehreren Monomeren mit konjugierter Diengruppe, das/die unter Butadien und/oder Isopren ausgewählt wird/werden, und aus einem oder mehreren vinylaromatischen Monomeren, das/die unter Styrol und/oder $\alpha$-Methylstyrol ausgewählt wird/werden, hergestellt wird,

wobei das Copolymer so aufgebaut ist, dass sein Anteil an Verknüpfungen D und sein Anteil an Verknüpfungen VA gleichzeitig die vier folgenden Relationen erfüllen:

(i) $D \geq 66 - 1,58 \cdot VA$
(ii) $D \leq 124 - 1,71 \cdot VA$
(iii) $D > 10$,
(iv) $VA > 10$, und

- **dass** der DBP-Strukturwert (in ml/ 100 g) und die spezifische BET-Oberfläche (in $m^2/g$) des Rußes die folgende Relation erfüllen:

$$DBP \leq -0,88 \cdot BET + 185.$$

3. Luftreifen nach einem der Ansprüche 1 und 2, **dadurch gekennzeichnet, dass** die Zusammensetzung außerdem mindestens einen verstärkenden hellen Füllstoff, der Kieselsäure und/oder Aluminiumoxid umfaßt, mit einer spezifischen BET-Oberfläche von 30 bis 240 $m^2/g$ in einer Menge von weniger als 50 pce enthält, wobei der Füllstoff an seiner Oberfläche mit Gruppen SiOH und/oder AlOH versehen ist.

4. Luftreifen nach einem der Ansprüche 1 und 2, **dadurch gekennzeichnet, dass** die Zusammensetzung außerdem Ruß, der an seiner Oberfläche mit Gruppen SiOH und/oder AlOH versehen ist, in einer Menge von weniger als 50 pce enthält.

5. Luftreifen nach einem der vorhergehenden Ansprüche, **dadurch gekennzeichnet, dass** die Zusammensetzung außerdem 1 bis 5 pce eines Antioxidationsmittels enthält, das aus einem p-Phenylendiamin besteht.

6. Luftreifen nach einem der vorhergehenden Ansprüche, **dadurch gekennzeichnet, dass** die Zusammensetzung außerdem 0,03 bis 3 pce eines Metallsalzes enthält, das unter den organischen Salzen und den Hydroxiden von Cobalt, Nickel und Eisen ausgewählt ist.

7. Luftreifen nach einem der vorhergehenden Ansprüche, **dadurch gekennzeichnet, dass** die Zusammensetzung außerdem Stearinsäure in einer Menge von weniger als 2 pce enthält.

8. Luftreifen nach einem der vorhergehenden Ansprüche, **dadurch gekennzeichnet, dass** die Zusammensetzung außerdem Zinkoxid in einer Menge von mehr als 2 pce enthält.

9. Luftreifen nach einem der vorhergehenden Ansprüche, **dadurch gekennzeichnet, dass** die Zusammensetzung außerdem 1 bis 6 pce Schwefel enthält.

10. Luftreifen nach einem der vorhergehenden Ansprüche, **dadurch gekennzeichnet, dass** die elastomere Verstärkungsschicht eine Dicke aufweist, die im Bereich von 1 bis 4 mm liegt.

11. Luftreifen nach einem der vorhergehenden Ansprüche, **dadurch gekennzeichnet, dass** die Zusammensetzung außerdem Kaolin enthält.